# EUROPÄISCHE PATENTSCHRIFT

(11) **EP 0 509 366 B1**
(45) Veröffentlichungstag und Bekanntmachung des Hinweises auf die Patenterteilung: **27.09.1995**
(21) Anmeldenummer: 92105952.3
(22) Anmeldetag: 07.04.1992
(51) Int. Cl.: H02K 15/12, B05D 1/30

(54) **Verfahren und Vorrichtung zur Träufelharzimprägnierung**
Method and device for resin trickle impregnation
Procédé et dispositif d'imprégnation goutte à goutte de résine

(30) Priorität: 19.04.1991 DE 4112776
(43) Veröffentlichungstag der Anmeldung: 21.10.1992
(73) Patentinhaber: Kress-elektrik GmbH + Co. Elektromotorenfabrik, D-72406 Bisingen (DE)
(72) Erfinder: Kress, Willy, W-7457 Bisingen (DE)
(74) Vertreter: Otte, Peter, Dipl.-Ing.

(56) Entgegenhaltungen:
- DE-A- 3 916 619
- DE-B- 2 251 239
- US-A- 3 676 197

## Beschreibung

### Stand der Technik

Die Erfindung geht aus von einem Verfahren zur Träufelharzimprägnierung von elektrische Leitungen enthaltenden Teilen nach dem Oberbegriff des Anspruchs 1 und einer Vorrichtung zur Durchführung dieses Verfahrens nach dem Oberbegriff des Anspruchs 12.

Es ist bekannt, zur (ergänzenden) gegenseitigen Isolierung von elektrischen Leitungen, elektrischen Elementen u. dgl. diese mit einer Harzschicht zu überziehen oder vollständig in eine schützende Harzmasse einzubetten bzw. insbesondere auch solche elektrischen Leitungen, die dynamischen Beanspruchungen unterworfen sind wie beispielsweise Wicklungen bei elektrischen Motoren, also Ankerwicklungen, Statorwicklungen u. dgl. durch eine sogenannte Träufelharzimprägnierung nicht nur mit einer äußeren Harzschicht zu versehen, sondern auch die gesamte Wicklung von der Harzschicht sozusagen durchtränken zu lassen, so daß sich ein wirksamer Schutz, eine besonders gute Stabilisierung der Wicklungen und Leitungen gegeneinander und natürlich die schon erwähnte Isolierung ergibt (vgl. DE-A-39 16 619 oder DE-A-22 51 239).

Probleme bei solchen Träufelharzimprägnierungsverfahren ergeben sich dadurch, daß die auf die Wicklung, beispielsweise eine Ankerwicklung aufzubringende Harzmasse hinreichend flüssig sein soll, um möglichst in alle Zwischenräume und Öffnungen einzudringen und die Leitungen vollständig zu umgeben, andererseits aber auch so dickflüssig zu halten ist, daß Harz beim Imprägnieren nicht von selbst nach unten wieder abtropft und vor allen Dingen auch dafür zu sorgen, daß nach dem Aufbringen der Harzimprägnierung die Erstarrung der aufgebrachten Masse möglichst umgehend einsetzt, wozu Härter in wohlabgemessener Dosierung und vor allen Dingen in guter Durchmischung dem Imprägnierharz zugesetzt werden muß.

Mindestens bei der Imprägnierung bestimmter Teile mit elektrischen Komponenten kann bei einem solchen Imprägnierungsverfahren nur intermittierend vorgegangen werden, da beispielsweise bei der Träufelharzimprägnierung eines Ankers eines Elektromotors ein fertig behandelter Anker erst abgeführt werden muß, bevor ein neues zu behandelndes Teil herangeschafft wird. Zu diesem Zeitpunkt sollte der Imprägnierstrom des Harzes unterbrochen werden, wobei auch sonstige Unterbrechungen nicht ausgeschlossen sind. Solche Unterbrechungen können aber dazu führen, daß bei Härter enthaltendem Harz dieses gegebenenfalls schon teilweise im Bereich der Austrittsdüse aushärtet und die Düse unter Umständen immer mehr zugesetzt wird, so daß man mit dem Zeittakt nicht mehr klarkommt, oder man erzielt bei zu geringen Härtermengen keine hinreichend schnelle Stabilisierung des flüssigen Harzvolumens, was ebenfalls Probleme bereiten kann.

Ohnehin ist die Dosierung des der Harzmasse zuzusetzenden Härters kritisch, wenn beispielsweise nur ein Teil Härter auf 99 Teile Kunstharz als eine mögliche gängige Rezeptur verwendet werden sollen.

Im folgenden wird im wesentlichen ausschließlich von der Träufelharzimprägnierung der Ankerwicklung eines Elektromotors die Rede sein; es versteht sich aber, daß die Erfindung auf diese spezielle Anwendungsmöglichkeit nicht beschränkt ist, sondern beliebige, mit Kunstharz zu imprägnierende Anwendungsmöglichkeiten umfaßt, bei denen, auf welches zu imprägnierende Teil auch immer, der aufzubringende Kunstharz eine freie Weglänge beispielsweise vom Austritt einer Düse bis zum Auftrittspunkt auf das zu imprägnierende Objekt durchströmt.

Der Erfindung liegt demnach die Aufgabe zugrunde, ein Verfahren und eine Vorrichtung zur Träufelharzimprägnierung von elektrische Leitungen oder sonstige elektrische Teile enthaltenden Bauelementen, Komponenten, Armaturen, Ankerwicklungen u. dgl. zu schaffen, bei denen sich eine problemlose Imprägnierung mit hoher Genauigkeit in der Dosierung des zuzusetzenden Härters mit schnellem Arbeitsablauf verbindet, ohne daß es vorzeitig zu Aushärtungen der aufzubringenden Harzmasse kommen kann.

### Vorteile der Erfindung

Die Erfindung löst diese Aufgabe mit den kennzeichnenden Merkmalen des Anspruchs 1 bzw. des Anspruchs 12 und hat den Vorteil, daß mit der mit Härter versetzten Harzmasse überhaupt kein verarbeitungstechnisch erforderliches Teil oder Gerät in Berührung kommt, mit der Ausnahme der zu imprägnierenden oder zu beschichtenden Komponente selbst, mit anderen Worten durch die Erfindung wird es unmöglich, daß der Arbeitsablauf durch vorzeitige Aushärtungen des Harzes beeinträchtigt wird.

Dort, wo sich ausfließendes Harz unter Umständen ansammeln kann, beispielsweise an einer Austritt-Dosierdüse, läßt sich dieses problemlos wieder abwischen, denn die Erfindung hält die Kunstharzmasse einerseits und den Härter andererseits vollkommen voneinander getrennt bis zu dem Moment, wo der Kunstharz im freien Fall eine Wegstrecke bis zu einem jeweiligen Auftrittspunkt an dem zu imprägnierenden Teil, also beispielsweise dem Elektromotoranker zurücklegt. Erst in diesem letzten Moment wird der Härter in, falls erwünscht auch hochgenau dosierter Menge zugesetzt und er vermischt sich dennoch deshalb innig mit dem Harz, weil dieses hinreichend flüssig eingestellt ist. Dieser Vermischvorgang vor und während des Auftreffens des Harzes mit dem Härter wird noch dadurch begünstigt, daß man eine Ringdüse verwendet, durch deren Mittelpunkt der flüssige Imprägnierharzwurm oder -strahl hindurchfließt und auf den von allen Seiten aus der innen kleine Austrittsöffnungen aufweisenden Ringdüse der Härter von außen aufgesprüht wird.

Durch die relativen Größenverhältnisse - je kleiner und schmaler der härterfreie Träufelharzimprägnierstrahl, desto größer seine Oberfläche im Verhältnis zur Masse - ergibt sich schon an dieser Stelle eine innige Benetzung und auch Durchmischung des Träufelkunstharzes mit dem Härter. Diese Durchmischung wird dann noch vervollkommnet und verbessert, sobald der sich dynamisch bewegende Strahl oder nunmehr mit Härter versehene Imprägnierharzwurm an seinem Bestimmungsort auftrifft und sich dort infolge anderer, hauptsächlich physikalischer Eigenschaften auch in kleinste Öffnungen und Ritzen begibt und Oberflächen abdeckt (durch Adhäsionswirkung). Dies sind Bewegungen, die gleichzeitig auch eine weitere Durchmischung und Benetzung auch eventuell im Strahl eher innen liegender Harzteile mit dem Härter begünstigen, so daß in Sekundenbruchteilen nach dem Austritt des zunächst härterfreien Träufelharzes aus seiner Zufuhrdüse der Harzstrahl mit Härter benetzt ist und die chemische Wirkung des Aushärtens einsetzen kann.

Es versteht sich, daß die verschiedenen Mengen, Geschwindigkeiten und Größenabmessungen sowie Temperaturen je nach Anwendungsfall einzustellen sind, mit dem gemeinsamen Grundmerkmal, daß der Härter dem Kunstharzstrahl erst in dessen freien Fall auf das zu imprägnierende Objekt zugesetzt wird, also im letztmöglichen Moment und ohne daß sich hierdurch überhaupt Gelegenheit ergibt, daß mit Härter versetzter Kunstharz mit irgendwelchen anderen Teilen im Verarbeitungsbereich in Berührung kommt, ausgenommen allein das zu imprägnierende Objekt.

Durch die in den Unteransprüchen aufgeführten Maßnahmen sind vorteilhafte Weiterbildungen und Verbesserungen der Erfindung möglich. Wegen der unter Umständen kritischen Dosierung der nur sehr geringen zuzusetzenden Härtermengen (gegebenenfalls im Größenordnungsbereich von nur 1 %) kann es empfehlenswert sein, dem Härter noch eine Trägerflüssigkeit zuzugeben, die ihrerseits chemisch inert ist, jedenfalls was den Aushärtevorgang selbst betrifft, die aber die Handhabbarkeit des Härters selbst wesentlich verbessert, beispielsweise dessen Ausspritzen aus der (Ring)Düse und das Fließverhalten des Härters verbessert.

Dabei kann diese Tragerflüssigkeit ergänzend noch so ausgebildet sein, daß sie selbst gegebenenfalls harzfreundliche Komponenten oder Teilkomponenten enthält, die die physikalisch/chemische Reaktion zwischen Harz und Härter verbessern bzw. begünstigen - alternativ ist es aber auch möglich, für die Trägerflüssigkeit eine besonders leicht flüchtige, also verdunstende Flüssigkeit zu verwenden, die schon in dem Moment wieder verschwunden sein kann, in welchem der mindestens auf seiner Oberfläche mit dem Härter benetzte Träufelkunstharzstrahl auf der zu imprägnierenden Armatur auftrifft. Hier sind der empirischen Verfahrung keine Grenzen gesetzt, wobei auch anfängliche Viskosität, Menge des zuzusetzenden Härters, Länge der Distanz, die der Kunstharzstrahl durchfällt, bevor er auf das Objekt auftritt, Geschwindigkeit des Aufbringens u.dgl. Einstellungen und Bemessungsdaten sind, die sich am besten beim praktischen Arbeiten optimal ermitteln lassen.

### Zeichnung

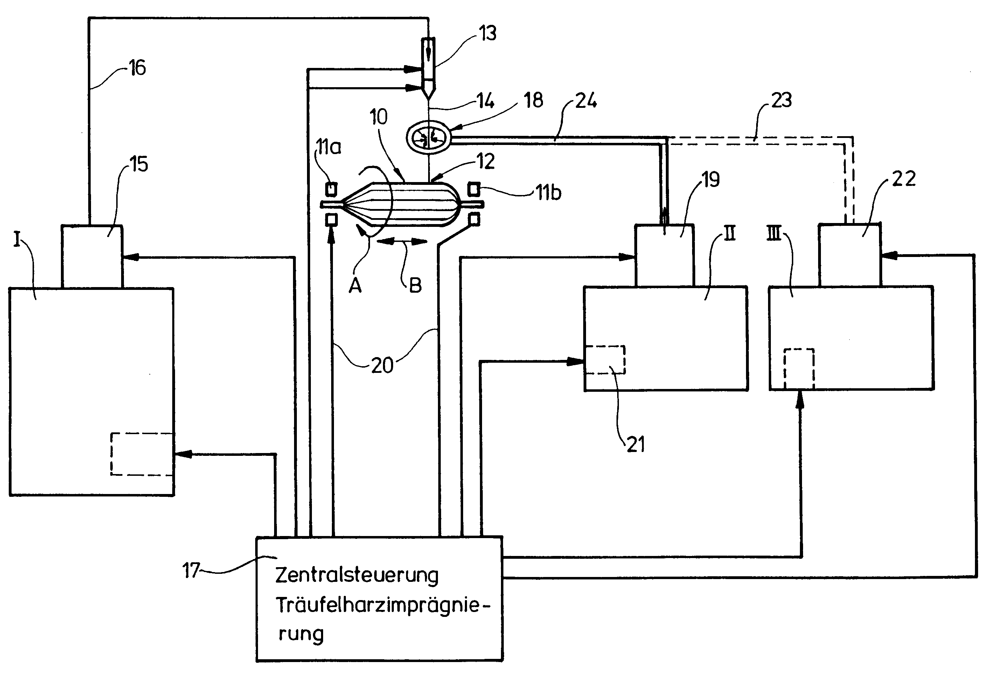

Ein einfaches Ausführungsbeispiel der Erfindung ist in der schematischen Darstellung der Zeichnung angegeben und wird in der nachfolgenden Beschreibung näher erläutert. Die Zeichnung zeigt schematisiert die Zuführung von Träufelharzmasse und Härter zu einem zu beschichtenden Werkstück, nämlich dem Anker eines Elektromotors.

### Beschreibung der Ausführungsbeispiele

Der Grundgedanke vorliegender Erfindung besteht darin, bei der Träufelharzimprägnierung von Objekten, speziell elektrische Wicklungen aufweisenden Komponenten von Elektromotoren u. dgl., beispielsweise also Anker, Statorwicklungen, einen der gewünschten Arbeitsgeschwindigkeit entsprechend in seinem Durchmesser bemessenen Träufelharzstrahl auf das Objekt, also den Anker aufzubringen und die Zumischung des Härters für das Imprägnierharz erst in dem Moment vorzunehmen, in welchem der Härter aus einer zugeordneten Auslaßöffnung oder -düse austritt und beispielsweise im freien Fall (durch Schwerkrafteinwirkung) dem zu imprägnierenden Objekt zustrebt. Dieses bewegt sich unterhalb der Auftrittsstelle des nun mit Härter versehenen Kunstharzstrahls in jeweils vorgegebene Richtungen und kann sich auch entsprechend drehen, so daß eine vollständige Imprägnierung möglich ist.

In der Zeichnung ist das zu imprägnierende Objekt, welches im folgenden durchgängig als Anker eines Elektromotors bezeichnet wird, mit 10 bezeichnet; dieser Anker 10 ist vorzugsweise beidseitig in geeigneten, nicht genauer erläuterten Lagern 11a, 11b zur Durchführung einer Drehbewegung entsprechend dem Pfeil A und gegebenenfalls gleichzeitig einer Längsverschiebebewegung entsprechend dem Doppelpfeil B gehalten, so daß der Auftreffort 12 des aus einer entsprechenden Dosierdüse 13 ausströmenden Träufelharzstrahl 14 sich über der Fläche des Ankers 10 im gewünschten Maße zur Erzielung einer umfassenden Imprägnierung verschiebt.

Der härterfreie Träufelharz befindet sich in einem ersten Behälter oder Gefäß I und kann beispielsweise mittels einer zugeordneten Pumpe 15 über eine Verbindungsleitung 16 zur Dosierdüse 13 geführt sein. Alternativ ist es möglich und gegebenenfalls auch bevorzugt, die Pumpe 15 als Dosierpumpe auszubilden und das geförderte Träufelharz bei 13 dann beispielsweise frei austreten zu lassen, wobei die auch im folgenden sogenannte Dosierdüse 13 auch als Magnetventil ergänzend zu einer Dosiermöglichkeit ausgebildet sein kann, so daß taktgesteuert der Kunstharzausfluß bestimmt wird.

Hierzu ist bevorzugt eine elektrische oder elektronische Zentralsteuerung 17 vorgesehen, die die verschiedenen Arbeitskomponenten zur Träufelharzimprägnierung entsprechend ansteuert, gegebenenfalls auch einem Programm folgend, wozu dann sinnvollerweise innerhalb der Zentralsteuerung auch rechnergesteuerte Abläufe, beispielsweise mittels eines entsprechenden Mikroprozessors und unter Abfrage gespeicherter Werte realisiert sind.

Es empfiehlt sich, das im Behälter I befindliche härterfreie Träufelharz entsprechend vorzuheizen, beispielsweise mittels eines bei 17 lediglich schematisch angedeuteten Heizaggregats, welches ebenfalls von der Zentralsteuerung mit entsprechender Temperaturrückmeldung gesteuert wird. Hierdurch ergibt sich eine bestimmte Viskosität des Harzes, der in Verbindung mit der zeitlichen Fördermenge beispielsweise durch die Dosierpumpe 15 oder aufgrund des Austrittsquerschnitts des Dosierventils 13 als bemessener Strahl 14 austritt und auf das zu imprägnierende Objekt gelangt. Die Überführung des zunächst härterfreien Träufelharzes auf das zu imprägnierende Objekt erfolgt bevorzugt durch Schwerkrafteinwirkung, also von oben nach unten, wobei der Härter erst in dem Moment zugesetzt wird, wenn sichergestellt ist, daß der austretende Träufelharzstrahl 14 keinen anderen Gegenstand mehr berühren kann mit Ausnahme des von ihm zu imprägnierenden Objektes selbst.

Hierzu ist eine Härteraufbringdüse 18 vorgesehen, der über eine weitere Förderpumpe 19 aus einem Härtervorratsgefäß II Härter zugeführt wird, der aus entsprechenden Düsenöffnungen austritt und auf den durchfallenden Träufelharzstrahl auftrifft. Die den Härter zuführende Härteraufbringdüse kann so ausgebildet sein, daß der Härter nur von einer Seite auf den Träufelharzstrahl aufgespritzt wird; bevorzugt ist diese Härteraufbringdüse aber als Ringdüse ausgebildet, die dann gleichzeitig so positioniert ist, daß der mit dem Härter zu besprühende Träufelharzstrahl geometrisch etwa durch die Mitte der offenen Ringdüse geführt ist. Auf diese Weise ist es möglich, an der Innenwandung der Ringdüse entsprechende kleine Schlitze in vorzugsweise gleichmäßiger Verteilung anzubringen, durch welche der Härter, entsprechend abgestimmt auf den Durchlauf des Träufelharzes, unter entsprechendem Druck ausdringt und auf die Oberfläche des Träufelharzstrahls auftrifft. Da sich beide an dieser Stelle treffende Medien dynamisch bewegen, ergibt sich schon an dieser Stelle und auch im Fortlauf weiter nach unten eine mehr oder weniger innige und umfassende Benetzung zwischen Härter und Träufelharz, die nach dem Auftreffen des Träufelharzstrahls auf dem zu imprägnierenden Objekt 10 noch wesentlich verstärkt wird, da sich durch die abrupte Bremsung des schnell bewegenden Strahls die verschiedensten kinetischen Kleinkräfte auf den Strahl auswirken, der hierdurch zerspringt, zerfließt und Bewegungen in alle Richtungen durchführt, wodurch die innige Benetzung mit dem Härter dann unter allen Umständen gegeben ist.

Gleichzeitig mit diesem Aufbringen erfolgt eine mechanische Relativbewegung zwischen dem Auftreffpunkt 12 des mit Härter versehenen Träufelharzstrahls und der Oberfläche des zu imprägnierenden Objektes in beliebigen Richtungen. Handelt es sich bei dem Objekt wie durchgehend erwähnt um den Anker eines Elektromotors, dann kann dieser entsprechend dem Pfeil A eine Drehbewegung bei gleichzeitiger Längsbewegung durchführen, so daß allseitig Imprägnierharz in schneller getakteter Abfolge aufgebracht wird, bevor der nächste Anker herangeführt wird.

Diese verschiedenen Relativbewegungen können in beliebiger, für den Fachmann erkennbarer Weise durchgeführt werden, wobei entsprechend den Pfeilen 20 auch eine Ansteuerung der das zu imprägnierende Objekt 10 lagernden Lager 11a, 11b über die Zentralsteuerung möglich ist, um zu einem einheitlichen zeitlich abgestimmten Imprägnierverfahren zu kommen, bei welchem auch die Vorschubgeschwindigkeit des Ankers einbezogen ist.

Es kann empfehlenswert sein, auch den Härter mittels einer geeigneten Vorheizung 21 auf eine gewünschte Temperatur und Viskosität einzustellen. Auch dies kann unter der umfassenden Steuerung und Regelung durch die Zentralsteuerung 17 erfolgen, desgleichen die Ansteuerung der den Härter fördernden Pumpe 19, wobei auch hier wieder die Ausbildung als Dosierpumpe möglich ist, oder man dosiert durch entsprechende Querschnittseinstellung im Bereich der (Ring)Düse 18 für die Härteraufbringung.

Eine weitere vorteilhafte Ausgestaltung vorliegender Erfindung besteht darin, daß man wegen der unter Umständen nur sehr geringen Härtermenge, die dem Träufelharz zuzusetzen ist, den Härter schon vorher im Härtergefäß II oder auch zu jedem beliebigen späteren Zeitpunkt während seiner Verarbeitungszuführung mit einer Trägerflüssigkeit versetzt, die dann auch in einem weiteren Gefäß III aufbewahrt sein kann, wenn die Zuführung der Trägerflüssigkeit über eine gesonderte (Dosier)Pumpe 22 und die gestrichelt dargestellte Leitung 23 im Bereich der Zufuhrleitung 24 des Härters, also erst an dieser Stelle erfolgt.

Um hier auch eine bessere Vorstellung ermöglichende numerische Werte zu nennen, die die Erfindung natürlich nicht beschränken, wird darauf hingewiesen, daß die normale Träufelharzmenge für einen durchschnittlichen Anker im Bereich von beispielsweise lediglich 4,9 g liegen kann; diese Träufelharzmenge benötigt dann zur Aushärtung eine Härtermenge von lediglich 49 mg, wobei anzustreben ist, diese Verhältnisse möglichst genau einzuhalten. Der Erfindung gelingt dies in besonders zufriedenstellender Weise, wobei auch ein schnelles Arbeiten begünstigt wird, denn da der Härter erst im letzten Moment zugesetzt wird vor Auftreffen auf dem zu imprägnierenden Objekt, kann hier auch mit größeren Härtermengen und einer schnelleren Aushärtung gearbeitet werden, so daß sich die Taktgeschwindigkeit beim Imprägnieren erhöhen läßt.

## Patentansprüche

1. Verfahren zur Träufelharzimprägnierung von elektrische Leitungen enthaltenden Teilen, insbesondere Stator und/oder Ankerwicklungen von Elektromotoren, Armaturen, elektrischen Leiterplatten u. dgl., wobei ein Strahl aus flüssigem Kunstharz in Verbindung mit einer Härtersubstanz auf das zu imprägnierende Objekt (Anker 10) aufgebracht wird, dadurch gekennzeichnet, daß härterfreies Träufelkunstharz separat über eine Austrittsöffnung in vorgegebener Menge zugeführt wird und Härter in abgemessener Menge dann mit dem Träufelharz vermischt wird, wenn sich dieses in berührungsfreier Strahlform zwischen der Austrittsöffnung und dem zu imprägnierenden Objekt befindet.

2. Verfahren nach Anspruch 1, dadurch gekennzeichnet, daß die Austrittsöffnung für das härterfreie Träufelharz von einer Düse (13) gebildet ist, aus welcher das Träufelharz strahlförmig im freien Fall durch Schwerkraftwirkung nach unten austritt und auf das sich relativ zum Auftreffpunkt (12) in beliebigen Richtungen bewegende zu imprägnierende Objekt (10) auftrifft.

3. Verfahren nach Anspruch 1 oder 2, dadurch gekennzeichnet, daß der Härter durch feinstes Aufsprühen auf den sich im freien Fall befindlichen Träufelharzstrahl mit diesem innig vermischt wird.

4. Verfahren nach einem der Ansprüche 1-3, dadurch gekennzeichnet, daß der Härter mittels einer Ringdüse (18) auf den zentral durch die Ringdüse durchlaufenden Träufelharzstrahl allseitig auf dessen Oberfläche aufgebracht (aufgesprüht) wird.

5. Verfahren nach einem der Ansprüche 1-4, dadurch gekennzeichnet, daß härterfreies Träufelharz und/oder Härter durch Dosierpumpen (15, 19) in vorgegebener Menge zugeführt werden.

6. Verfahren nach einem der Ansprüche 1-4, dadurch gekennzeichnet, daß härterfreies Träufelharz und/oder Härter durch gesteuerte Querschnittverengung an ihren jeweiligen Austrittsstellen zudosiert werden.

7. Verfahren nach einem der Ansprüche 1-6, dadurch gekennzeichnet, daß dem Härter eine Trägerflüssigkeit zugesetzt wird.

8. Verfahren nach Anspruch 7, dadurch gekennzeichnet, daß die Trägerflüssigkeit dem Härter von Anfang an zugesetzt ist und mit diesem ein vorbereitetes, durch die Ringdüse aufzubringendes Gemisch bildet.

9. Verfahren nach Anspruch 7, dadurch gekennzeichnet, daß die Härterflüssigkeit in einem separaten Behälter (III) aufbewahrt ist und dosiert der Zufuhrleitung für den Härter zur Ringdüse zugesetzt wird.

10. Verfahren nach einem der Ansprüche 1-9, dadurch gekennzeichnet, daß die sich in Vorratsbehältern (I, II, III) befindenden Träufelharz-, Härter- und Trägerflüssigkeitsmengen vorgeheizt werden.

11. Verfahren nach einem oder mehreren der Ansprüche 1-10, dadurch gekennzeichnet, daß eine elektrische oder elektronische Zentralsteuerung (17) die Zudosierung von Träufelharz und/oder Härter und/oder Trägerflüssigkeit sowie Vorschub- und Bewegungsgeschwindigkeit des zu imprägnierenden Objektes bestimmt.

12. Vorrichtung zur Träufelharzimprägnierung von elektrische Leitungen enthaltenden Teilen, insbesondere Stator- und/oder Ankerwicklungen von Elektromotoren, Armaturen, elektrischen Leiterplatten u. dgl., wobei auf das zu imprägnierende Objekt (Anker 10) mit Härtersubstanz versetztes Kunstharz aufgeträufelt wird, dadurch gekennzeichnet, daß zwischen dem Austrittsort von härterfreiem Träufelkunstharz und dem Auftreffort des Träufelkunstharzstrahls auf das zu imprägnierende Objekt (Anker 10) eine Härteraufbringdüse (18) angeordnet ist, die auf den sich berührungsfrei bewegenden Träufelharzstrahl Härter aufbringt.

13. Vorrichtung nach Anspruch 12, dadurch gekennzeichnet, daß eine die Austrittsöffnung für das härterfreie Träufelharz bildende (Dosier)Düse (13) vorgesehen ist, die sich relativ zur mit dem Träufelharz zu imprägnierenden Oberfläche des Objektes (10) bewegt und daß die Härteraufbringdüse eine Ringdüse (18) ist, durch deren Mitte der Träufelkunstharzstrahl, dabei allseitig von Härtersubstanz besprüht, fließt.

14. Vorrichtung nach einem der Ansprüche 12 oder 13, dadurch gekennzeichnet, daß eine elektrische oder elektronische Zentralsteuerung (17) vorgesehen ist, die die Zudosierung von zunächst härterfreiem Träufelharz und/oder Härter und/oder Trägerflüssigkeit für den Härter bestimmt, in Verbindung mit den jeweiligen relativen Vorschubgeschwindigkeiten und gleichzeitig durch entsprechende Vorheizungen die Viskosität der aufzubringenden und zu vermischenden Substanzen vorgibt.

## Claims

1. A method of resin impregnation of parts containing electric lines, in particular stator and/or armature coils of electric motors, armatures, electrical circuit boards and the like, wherein a jet of liquid synthetic resin is applied in conjunction with a hardener substance to the object to be impregnated (armature 10), **characterized in that** hardener-free synthetic impregnating resin is supplied separately by way of an outlet opening in a pre-determined quantity and hardener in a measured quantity is then mixed with the impregnating resin when the latter is present in the form of a contact-free jet between the outlet opening and the object to be impregnated.

2. A method according to Claim 1, **characterized in that** the outlet opening for the hardener-free impregnating resin is formed by a nozzle (13) from which the impregnating resin emerges downwards in the form of a jet in free fall by the force of gravity and encounters the object to be impregnated (10) moving in any direction relative to the impact point (12).

3. A method according to Claim 1 or 2, **characterized in that** the hardener is mixed intimately with the jet of impregnating resin by being sprayed finely onto the said jet of impregnating resin which is in free fall.

4. A method according to one of Claims 1 to 3, **characterized in that** the hardener is applied (sprayed) by means of an annular nozzle (18) from all sides onto the surface of the jet of impregnating resin passing centrally through the annular nozzle.

5. A method according to one of Claims 1 to 4, **characterized in that** the hardener-free impregnating resin and/or hardener are supplied in a pre-determined quantity by metering pumps (15, 19).

6. A method according to one of Claims 1 to 4, **characterized in that** the hardener-free impregnating resin and/or hardener are metered in at their respective outlet points by a constriction of controlled cross-section.

7. A method according to one of Claims 1 to 6, **characterized in that** a carrier liquid is added to the hardener.

8. A method according to Claim 7, **characterized in that** the carrier liquid is added to the hardener from the beginning and a prepared mixture to be applied through the annular nozzle is formed therewith.

9. A method according to Claim 7, **characterized in that** the hardener liquid is kept in a separate container (III) and is added in a metered manner to the supply line for the hardener to the annular nozzle.

10. A method according to one of Claims 1 to 9, **characterized in that** the quantities of impregnating resin, hardener and carrier liquid are pre-heated in storage containers (I, II, III).

11. A method according to one or more of Claims 1 to 10, **characterized in that** an electrical or electronic central control device (17) determines the metering of the impregnating resin and/or hardener and/or carrier liquid as well as the speed of advance and movement of the object to be impregnated.

12. A device for the resin impregnation of parts containing electric lines, in particular stator and/or armature coils of electric motors, armatures, electrical circuit boards and the like, wherein synthetic resin mixed with a hardener substance is trickled onto the object to be impregnated (armature 10), **characterized in that** a hardener-application nozzle (18) is arranged between the outlet point of the hardener-free impregnating resin and the impact point of the jet of synthetic impregnating resin upon the object to be impregnated (armature 10), the hardener-application nozzle (18) applying hardener to the jet of impregnating resin which moves without contact.

13. A device according to Claim 12, **characterized in that** a (metering) nozzle (13) forming the outlet opening for the hardener-free impregnating resin is provided, and moves relative to the surface of the object (10) to be impregnated with the impregnating resin, and the hardener-application nozzle is an annular nozzle (18), through the middle of which the jet of synthetic impregnating resin flows while being sprayed on all sides with hardener substance.

14. A device according to one of Claims 12 [and] 13, **characterized in that** an electrical or electronic central control device (17) is provided, which determines the metering of initially hardener-free impregnating resin and/or hardener and/or carrier liquid for the hardener, [and] in conjunction with the respective relative speeds of advance and at the same time by suitable pre-heating means it specifies the viscosity of the substances to be applied and to be mixed.

## Revendications

1. Procédé d'imprégnation goutte à goutte de résine, de pièces comportant des conducteurs électriques, notamment des enroulements de stator et/ou d'induits de moteurs électriques, de vannes, de circuits imprimés, ou produits analogues, selon lequel, on dirige un jet de résine synthétique liquide, en combinaison avec un agent durcisseur sur l'objet à imprégner (induit 10), caractérisé en ce que la résine synthétique ne contenant pas de durcisseur est fournie suivant une quantité prédéterminée, séparée par un orifice de sortie et l'agent durcisseur est alors mélangé suivant une quantité dosée à la résine d'imprégnation lorsque cette résine se trouve sous la forme d'un jet, sans contact, entre l'orifice de sortie et l'objet à imprégner.

2. Procédé selon la revendication 1, caractérisé en ce que l'orifice de sortie de la résine d'imprégnation, ne contenant pas d'agent durcisseur, est formé par une buse (13) qui émet la résine d'imprégnation sous la forme d'un jet en chute libre sous l'effet de la gravité, pour arriver sur l'objet (10) à imprégner, qui se déplace dans des directions quelconques par rapport au point d'impact (12).

3. Procédé selon la revendication 1 ou 2, caractérisé en ce que l'agent durcisseur est mélangé intimement avec le jet de résine d'impression en chute libre par une pulvérisation extrêmement fine.

4. Procédé selon l'une des revendications 1 à 3, caractérisé en ce que l'agent durcisseur est appliqué (pulvérisé) par une buse annulaire (18) de tous côtés sur la surface extérieure du jet de résine d'impression qui traverse le centre de la buse annulaire.

5. Procédé selon l'une des revendications 1 à 4, caractérisé en ce que la résine d'imprégnation, sans agent durcisseur et/ou l'agent durcisseur, sont fournis suivant des quantités prédéterminées par des pompes de dosage (15, 19).

6. Procédé selon l'une des revendications 1-4, caractérisé en ce que la résine d'imprégnation sans agent durcisseur et/ou l'agent durcisseur sont ajoutés l'un à l'autre de manière dosée par une réduction commandée de la section de leur point de sortie respectif.

7. Procédé selon l'une des revendications 1-6, caractérisé en ce qu'on ajoute un liquide vecteur à l'agent durcisseur.

8. Procédé selon la revendication 7, caractérisé en ce que le liquide vecteur est ajouté initialement à l'agent durcisseur et forme avec celui-ci un mélange préparé préalablement pour être appliqué par la buse annulaire.

9. Procédé selon la revendication 7, caractérisé en ce que l'agent durcisseur est conservé dans un récipient (III), distinct, pour être fourni de manière dosée à la conduite d'alimentation en agent durcisseur de la buse annulaire.

10. Procédé selon l'une des revendications 1-9, caractérisé en ce que les quantités de résine d'imprégnation, d'agents durcisseurs et le liquide vecteur contenu dans des récipients d'alimentation (I, II, III) sont préchauffées.

11. Procédé selon une ou plusieurs des revendications 1-10, caractérisé en ce qu'une commande centrale (17) électrique ou électronique détermine le dosage par addition de résine d'imprégnation et/ou d'agents durcisseurs et/ou de liquides vecteurs ainsi que la vitesse d'avance et de déplacement de l'objet à imprégner.

12. Dispositif d'imprégnation par de la résine goutte à goutte pour des pièces comportant des conducteurs électriques, notamment des enroulements de stator et/ou d'induits de moteurs électriques, de vannes, de plaques de circuits imprimés ou produits analogues, tandis qu'une résine synthétique réticulée par un agent durcisseur tombe goutte à goutte sur l'objet à imprégner (induit 10), caractérisé en ce qu'entre le point de sortie de la résine d'imprégnation ne contenant pas d'agent durcisseur et le point d'impact du jet de résine synthétique d'imprégnation sur l'objet à imprégner (induit 10), il est prévu une buse d'application de durcisseur (18) qui applique l'agent durcisseur sur le jet de résine d'imprégnation qui passe sans contact.

13. Dispositif selon la revendication 12, caractérisé par une buse (moyen de dosage) (13) constituant l'orifice de sortie de la résine d'imprégnation ne contenant pas d'agent durcisseur, cette buse se déplaçant par rapport à la surface de l'objet (10) à imprégner avec de la résine et en ce que la buse d'application d'agent durcisseur est une buse annulaire (18) traversée en son centre par le jet de résine d'imprégnation, ce jet recevant de tous côtés une pulvérisation d'agent durcisseur.

14. Dispositif selon l'une des revendications 12 ou 13, caractérisé par une commande centrale électrique ou électronique (17) qui définit le dosage de la résine d'imprégnation tout d'abord libre d'agent durcisseur et/ou d'agent durcisseur et/ou de liquide vecteur pour l'agent durcisseur, en prédéterminant, en fonction des vitesses de défilement relatives et par un préchauffage approprié, la viscosité des produits à mélanger et à appliquer.
